# EUROPÄISCHE PATENTANMELDUNG

(11) **EP 0 793 998 A2**
(43) Veröffentlichungstag der Anmeldung: **10.09.1997**
(21) Anmeldenummer: 97103073.9
(22) Anmeldetag: 26.02.1997
(51) Int. Cl.: B01D 67/00, B01D 71/10

(54) **Verfahren zur Stabilisierung der Eigenschaften cellulosischer Membranen**

(30) Priorität: 07.03.1996 DE 19608840
(71) Anmelder: Akzo Nobel N.V., 6824 BM Arnhem (NL)
(72) Erfinder: Breidohr, Hans-Günther, 42289 Wuppertal (DE); Pelger, Michael, Dr., 42389 Wuppertal (DE); Argyriadis, Panajotis, 42389 Wuppertal (DE)
(74) Vertreter: Fett, Günter

(57) **Zusammenfassung**

Eigenschaften cellulosischer Membranen wie z.B. die Länge oder die Ultrafiltrationsrate werden durch eine (Wärme/Feuchte)-Konditionierung stabilisiert, wobei Temperaturen in einem Bereich von etwa 30 bis 60 °C und relative Feuchten im Bereich von etwa 10 bis 60 % geeignet sind. In einer bevorzugten Ausführungs form werden die Membranen bei einer relativen Feuchte von etwa 50 % und bei etwa 22 °C mit einer gegen Feuchtedurchtritt zumindest im wesentlichen dichten Verpackung umhüllt, bevor sie der Konditionierung unterworfen werden.

## Beschreibung

Die Erfindung betrifft ein Verfahren zur Stabilisierung der Eigenschaften cellulosischer Membranen.

Nach der Herstellung cellulosischer Membranen, wie sie beispielsweise in DE-A-30 42 110 und EP-A-0 155 534 beschrieben ist, und während der Lagerung ändern sich Membraneigenschaften wie zum Beispiel Ultrafiltrationsrate (UFR) und Längenverhalten. Die Membraneigenschaften erreichen erst nach längerer Lagerzeit einen Zustand, der sich in der Folgezeit nur noch unwesentlich verändert, so daß man diesen Zustand als stabil bezeichnen kann. Die bis zum Erreichen des stabilen Zustandes aufzuwendende Lagerzeit beträgt in der Regel mehrere Monate. Solche Membranen können flächige, schlauch- oder hohlfadenförmige Ausführungsformen aufweisen.

Die cellulosischen Membranen werden zur Dialyse, Hämodialyse, Hämofiltration, Hämodiafiltration, Gasseparation, Mikrofiltration, Nano- und/oder Ultrafiltration und - mit einem Liganden versehen - als Affinitätsmembranen verwendet. Hierzu werden die Membranen in entsprechende Vorrichtungen eingebaut, die von den Membranen in zwei Räume unterteilt werden. Dazu müssen die Membranen dicht eingebettet sein. Nach Erreichen des stabilen Zustandes haben die Membranen gleichmäßigere UFR-Leistungen und können problemlos in die genannten Vorrichtungen eingebaut werden. Beispielsweise werden einbettungsbedingte Dichtigkeitsprobleme stark reduziert.

Wie bereits gesagt ist eine in der Regel mehrmonatige Lagerzeit notwendig, um den stabilen Zustand zu erreichen. Versucht man, die Membran vor Erreichen des stabilen Zustandes in die genannten Vorrichtungen einzubauen, um dadurch Lagerhaltungskosten zu verringern, können sich Handhabungsprobleme ergeben, weil einerseits die Abmessungen der genannten Vorrichtungen fest vorgegeben sind, andererseits aber Membraneigenschaften wie beispielsweise das Längenverhalten sich noch ändern. Deshalb kann der Membranhersteller die für eine Weiterverarbeitung notwendige Stabilität der Membranen nicht mit hinreichender Sicherheit gewährleisten.

Bei auf Spulen gewickelten Hohlfadenmembranen kommt hinzu, daß die Hohlfäden vor Erreichen des stabilen Zustandes dazu neigen, die ihnen durch die Spule aufgezwungene Form auch im Bündel beizubehalten (Spulengedächtis). Dieses Verhalten der Hohlfäden führt nach dem Bündelschnitt zu einem starken Aufspleißen einzelner Kapillaren, wodurch ein dichtes Einbetten erschwert wird. Dichtigkeitsprobleme können die Folge sein.

Der Hersteller cellulosischer Membranen ist vor die Wahl zwischen zwei Alternativen gestellt: Entweder lagert er die Membranen für mehrere Monate, um eine problemlose Weiterverarbeitung zu gewährleisten, oder er verkürzt die Lagerzeit, wodurch aber das Risiko einer erhöhten Ausschußrate bei der Weiterverarbeitung steigt. Somit wird der Hersteller cellulosischer Membranen zu einem Kompromiß zwischen Lagerkosten und Qualität gezwungen, der nicht befriedigen kann ganz gleich wie sich der Hersteller entscheidet.

Daher ist es Aufgabe der vorliegenden Erfindung, ein Verfahren zur Stabilisierung cellulosischer Membranen zur Verfügung zu stellen, das die beschriebenen Nachteile zumindest vermindert.

Diese Aufgabe wird durch ein Verfahren zur Stabilisierung der Eigenschaften cellulosischer Membranen gelöst, bei dem die cellulosischen Membranen bei einer Temperatur zwischen etwa 30 bis 60 °C und bei einer relativen Feuchte zwischen etwa 10 bis 60 % konditioniert werden. Membranen, die dem erfindungsgemäßen Konditionierungsverfahren unterworfen wurden, zeigen danach stabile Eigenschaften wie zum Beispiel Ultrafiltrationsrate und Länge. Überraschenderweise erreichen die erfindungsgemäß konditionierten Membranen den stabilen Zustand in einer deutlich verkürzten Zeit verglichen mit der bislang benötigten Lagerzeit. Das erfindungsgemäße Konditionierungsverfahren ermöglicht es, einen stabilen Zustand in einer Konditionierungszeit zu erreichen, die nur noch ein Drittel oder sogar einen noch kleineren Bruchteil der bislang nötigen Lagerzeit betragen kann.

Deshalb findet die Konditionierung vorteilhafterweise in einer Zeit von etwa 10 bis 250 Stunden statt. Mit dem erfindungsgemäßen Konditionierungsverfahren ist der Membranhersteller nunmehr in der Lage, nach einer wesentlich kürzeren Zeit stabile cellulosische Membranen zur Verfügung zu stellen, die sich genauso problemlos weiterverarbeiten lassen wie die mehrere Monate gelagerten Membranen.

Zweckmäßigerweise wird man bei dünnen Membranen eine kürzere Konditionierungszeit wählen, während dickere Membranen längere Konditionierungszeiten benötigen. Bei Hohlfadenmembranen hängt die benötigte Konditionierung u.a. auch von dem Fluidum ab, das bei der Herstellung der Membranen zur Gewährleistung des Hohlraumes verwendet wurde, wenn das Fluidum bei der Konditionierung noch im Hohlfaden enthalten ist. Unter Fluidum werden Gase, Flüssigkeiten und deren Gemische verstanden. Beispielsweise benötigt man für die unter dem Markennamen Hemophan® MC 65 erhältlichen und mit Isopropylmyristat als Fluidum hergestellten Hohlfadenmembranen mit einer Wandstärke von 6.5 µm eine Zeit von etwa 48 Stunden, während die unter dem Markennamen Hemophan® MC 58 erhältlichen und mit Isopropylmyristat als Fluidum hergestellten Hohlfadenmembranen mit einer Wandstärke von 8.0 µm eine Konditionierungszeit von etwa 96 Stunden brauchen, um einen stabilen Zustand zu erreichen.

Die für das Konditionierungsverfahren notwendigen Zeiten in Anhängigkeit von beispielsweise Wandstärke und Fluidum können durch einfache Versuchsreihen ermittelt werden.

Als vorteilhafter Bereich für die Temperatur, bei der die Konditionierung durchzuführen ist, hat sich ein Wert zwischen etwa 35 bis 50 °C insbesondere zwischen etwa 38 bis 42 °C herausgestellt.

Ein besonders günstiger Bereich für die relative Feuchte, bei der die Konditionierung durchzuführen ist, ist ein Wert zwischen etwa 10 bis 40 %.

Vorteilhafterweise werden die Membranen nach der Herstellung und vor der Konditionierung auf geeignete Vorrichtungen gewickelt. Beispielsweise werden Hohlfasermembranen auf Spulen und Flachmembranen auf Hülsen gewickelt und danach der Konditionierung unterworfen. Die nach der Konditionierung stabilisierten Membranen neigen in der Regel nicht mehr dazu, in die Form zurückzukehren, die ihnen durch die Aufwickelvorrichtung aufgezwungen wurde. Deshalb lassen sich die solchermaßen stabilisierten Membranen problemlos in die beschriebenen Vorrichtungen einbauen und zeigen beispielsweise keine Formänderungen.

Bei nach der Herstellung und vor der Konditionierung auf Spulen gewickelten Hohlfadenmembranen kommt hinzu, daß die nach der Konditionierung stabilisierten Membranen nach dem Bündelschnitt praktisch kein Aufspleißen einzelner Kapillaren zeigen, so daß nach Einbau des Bündels in die genannten Vorrichtungen beispielsweise einbettungsbedingte Dichtigkeitsprobleme stark reduziert sind.

Eine insbesondere unter dem Gesichtspunkt einer möglichst einfachen Durchführung des Konditionierungsverfahrens bevorzugte Ausführungsform besteht darin, die Membranen nach der Herstellung bei etwa 20 bis 25 °C und einer relativen Feuchte von etwa 40 bis 60 % mit einem Material zu umhüllen, das zumindest im wesentlichen gegen Feuchtedurchtritt dicht ist. Die in der Verpackung eingeschlossene Gesamtmenge an Wasser erlaubt es, ein für die Konditionierung erforderliches Mikroklima zu erzeugen, indem man lediglich die notwendige Konditionierungstemperatur vorgibt. Der Einsatz kostenaufwendiger Klimaschränke oder gar die klimatische Konditionierung ganzer Lagerhallen ist mit dem erfindungsgemäßen Konditionierungsverfahren nicht notwendig.

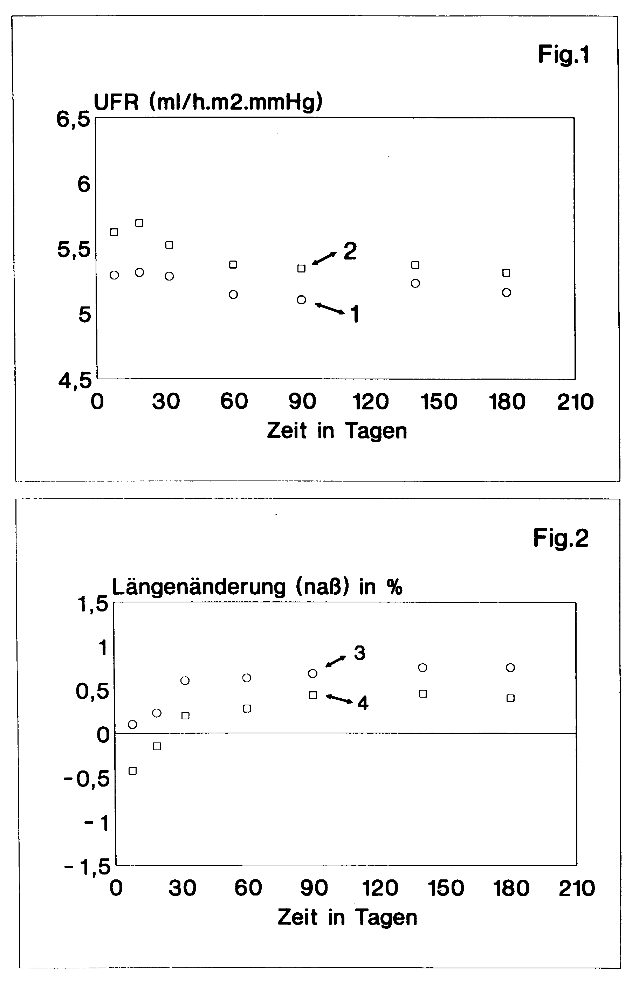

Die Erfindung wird anhand des nachfolgenden Beispiels und der Figuren 1 und 2 weiter erläutert.

**Figur 1** zeigt in einem Diagramm die UFR konditionierter Hohlfäden und wie üblich gelagerter Hohlfäden als Funktion der Zeit.

**Figur 2** zeigt in einem Diagramm die bei Benetzung auftretende Längenänderung konditionierter Hohlfäden (kreisförmige Meßpunkte 3) und wie üblich gelagerter Hohlfäden (viereckige Meßpunkte 4) als Funktion der Zeit.

### Beispiel

Cuprophan® Hohlfasermembranen der Type RC 55 (Lumen: 200 µm, Wandstärke: 8 µm, Innenfüllung: Isopropylmyristat) wurden nach ihrer Herstellung auf Spulen gewickelt. Bei etwa 22 °C und einer relativen Feuchte von etwa 50 % wurden die Spulen in Beuteln aus Polyethylen verpackt. Die Spulen mit den Beuteln wurden in einem weiteren Verpackungsvorgang in Gehäuse aus Polypropylen gesetzt. Diese Gehäuse wurden verschlossen und in einem Ofen bei einer Temperatur von 40 ± 2 °C bei der sich in dem Polyethylen-Beutel einstellenden relativen Feuchte von etwa 10 bis 20 % konditioniert. In gleicher Weise wurden Referenzspulen verpackt und wie üblich bei etwa 22 °C gelagert. Im definierten Zeitabständen wurden konditionierte und wie üblich gelagerte Hohlfäden der Verpackung entnommen und hinsichtlich UFR und Länge vermessen. Die Ergebnisse der Messungen sind in den Figuren 1 und 2 dargestellt.

Figur 1 zeigt in einem Diagramm die UFR konditionierter Hohlfäden (kreisförmige Meßpunkte 1) und wie üblich gelagerter Hohlfäden (viereckige Meßpunkte 2) als Funktion der Konditionierungs- bzw. Lagerzeit. Die UFR ist als Absolutwert angegeben. Ein Hohlfaden ohne erfindungsgemäßes Konditionierungsverfahren hat eine UFR von etwa 5.8 (ml/h m²mmHg) (nicht in Fig. 1 eingezeichnet). Während die wie üblich gelagerten Hohlfäden erst nach etwa 90 Tagen eine stabile UFR erreichen, zeigen die erfindungsgemäß konditionierten Hohlfäden bereits nach ca. 30 Tagen ein stabiles UFR-Niveau. Die Lage des Niveaus zeigt, daß die konditionierten Membranen bereits nach 30 Tagen ein Maß an UFR-Stabilität erreicht haben, das die wie üblich gelagerten Hohlfäden selbst nach 180 Tagen noch nicht besitzen.

Figur 2 zeigt in einem weiteren Diagramm die bei Benetzung mit Wasser auftretende Längenänderung konditionierter Hohlfäden (kreisförmige Meßpunkte 3) und wie üblich gelagerter Hohlfäden (viereckige Meßpunkte 4) als Funktion der Konditionierungs- bzw. Lagerzeit. Die Längenänderung ist in Prozent des Anfangswertes (Anfangswert gleich 100 %) angegeben. Ein Hohlfaden ohne Konditionierungsverfahren schrumpft bei Benetzung mit Wasser um etwa 0.5 % (in Fig. 2 nicht eingezeichnet). Während die wie üblich gelagerten Hohlfäden erst nach etwa 90 Tagen eine stabile Länge erreichen, zeigen die erfindungsgemäß konditionierten Hohlfäden bereits nach ca. 30 Tagen ein stabiles Längen-Niveau. Die Lage des Niveaus zeigt, daß die konditionierten Membranen bereits nach 30 Tagen ein Maß an Längen-Stabilität erreicht haben, das die wie üblich gelagerten Hohlfäden selbst nach 180 Tagen noch nicht besitzen.

## Patentansprüche

1. Verfahren zur Stabilisierung der Eigenschaften cellulosischer Membranen dadurch gekennzeichnet, daß die Membranen bei einer Temperatur zwischen etwa 30 bis 60 °C und bei einer relativen Feuchte zwischen etwa 10 bis 60 % konditioniert werden.

2. Verfahren nach Anspruch 1 dadurch gekennzeichnet, daß die Membranen den Konditionierungsbedingungen für eine Zeit von etwa 10 bis 250 Stunden ausgesetzt werden.

3. Verfahren nach Anspruch 1 oder 2 dadurch gekennzeichnet, daß die Membranen den Konditionierungsbedingungen bei einer Temperatur zwischen etwa 35 bis 50 °C ausgesetzt werden.

4. Verfahren nach Anspruch 3 dadurch gekennzeichnet, daß die Membranen den Konditionierungsbedingungen bei einer Temperatur zwischen etwa 38 bis 42 °C ausgesetzt werden.

5. Verfahren nach einem oder mehreren der Ansprüche 1 bis 4 dadurch gekennzeichnet, daß die Membranen den Konditionierungsbedingungen bei einer relativen Feuchte von etwa 10 bis 40 % ausgesetzt werden.

6. Verfahren nach einem oder mehreren der Ansprüche 1 bis 5 dadurch gekennzeichnet, daß die Membranen aufgewickelt werden, bevor sie der Konditionierung unterworfen werden.

7. Verfahren nach einem oder mehreren der Ansprüche 1 bis 6 dadurch gekennzeichnet, daß die Membranen bei einer relativen Feuchte von etwa 50 % und bei einer Temperatur von etwa 22 °C mit einer gegen Feuchtedurchtritt zumindest im wesentlichen dichten Verpackung umhüllt werden, bevor sie der Konditionierung unterworfen werden.

8. Verfahren zur Stabilisierung cellulosischer Membranen nach einem oder mehreren der Ansprüche 1 bis 7 dadurch gekennzeichnet, daß Hohlfadenmembranen der Konditionierung unterworfen werden.
